# EUROPEAN PATENT APPLICATION

(11) **EP 3 070 338 A1**
(43) Date of publication of application: **21.09.2016**
(21) Application number: 14861487.8
(22) Date of filing: 11.11.2014
(51) Int. Cl.: F04D 29/28, F02B 33/40, F02B 39/00

(54) **ROTARY UNIT**

(30) Priority: 12.11.2013 WO PCT/JP2013/080516; 18.09.2014 JP 2014189922
(71) Applicant: Kawasaki Jukogyo Kabushiki Kaisha, Kobe-shi, Hyogo 650-8670 (JP)
(72) Inventor: NARUOKA, Shohei, Akashi-shi Hyogo 673-8666 (JP); ICHI, Satoaki, Akashi-shi Hyogo 673-8666 (JP)
(74) Representative: Dr. Gassner & Partner mbB
(86) International application number: PCT/JP2014/079871
(87) International publication number: WO 2015/072459

(57) **Abstract**

A rotary unit (RU) includes a supercharger rotary shaft (44), an impeller (50) fitted to the supercharger rotary shaft (44) and operable to pressurize a fluid medium sucked from one end portion (44a) side of the supercharger rotary shaft (44), and a fastening member (85) to fix the impeller (50) to the supercharger rotary shaft (44) while pressing the impeller (50) in a direction axially of the supercharger rotary shaft (44). The fastening member (85) includes an internal thread portion (106) defined in an interior thereof and engageable with an external thread portion (104) of the supercharger rotary shaft (44). An outer surface (85b) of a tip end portion (85a) of the fastening member (85) is so formed as to represent a diametrically constricted shape in which it is continuously smoothly tapered in a direction away from the impeller (50).

## Description

### CROSS REFERENCE TO THE RELATED APPLICATION

This application is based on and claims Convention priority to the International Patent Application No. PCT/JP2013/080516, filed November 12, 2013, and Japanese patent application No. 2014-189922, filed September 18, 2014, the entire disclosures of which are herein incorporated by reference as a part of this application.

### BACKGROUND OF THE INVENTION

### (Field of the Invention)

The present invention relates to a rotary unit for supplying fluid under pressure, which rotary unit is of such a kind as to be mounted on a supercharger for pressurizing an intake air in an engine.

### (Description of Related Art)

A combustion engine mounted on an automotive vehicle such as, for example, a motorcycle has been known in which a supercharger is provided for pressurizing and supplying an air. In this respect, see, for example, Patent Document 1 listed below. An impeller used in this supercharger is driven in operative association with an engine rotation and is operable to pressurize a fluid medium drawn from one end side of the supercharger rotary shaft.

### [Prior Art Literature]

Patent Document 1: JP Laid-open Patent Publication No. 03-500319

In the supercharger disclosed in the Patent Document 1 listed above, a rotary shaft and an impeller are separately formed and, with the use of a nut, the impeller is fixed to one end portion of the rotary shaft. A rotary unit forms a rotatable portion of the supercharger, and the rotary unit operates, when driven at a high speed, to supply under pressure a fluid medium, drawn from one end side, to a discharge port. However, as a supercharger, increase of a pressurized supply amount of the fluid medium is desired for increasing the output of an engine.

### SUMMARY OF THE INVENTION

In view of the foregoing, the present invention has been devised to provide a rotary unit capable of increasing a pressurized fluid supply efficiency of a fluid medium.

In order to accomplish the foregoing object, the present invention provides, in accordance with one aspect thereof, a rotary unit which includes a rotary shaft, an impeller fitted to the rotary shaft and operable to pressurize a fluid medium sucked from one end portion side of the rotary shaft, and a fastening member fitted to one end portion of the rotary shaft and operable to fix the impeller to the rotary shaft while pressing the impeller in a direction axially of the rotary shaft. The fastening member referred to above includes an internal thread portion defined in an interior thereof, the internal thread portion being engageable with an external thread portion of the rotary shaft. The fastening member referred to above has a tip end portion, an outer surface of which tip end portion protrudes axially from one end face of the rotary shaft and is formed to represent a diametrically constricted shape in which the outer surface is tapered in a direction axially away from the impeller.

According to the construction hereinabove described, the outer surface of the tip end portion of the fastening member is so shaped as to represent the diametrically constricted shape with the outer surface being tapered in a direction away from the impeller. Therefore, the fluid medium is sucked smoothly by the impeller along the outer surface of the tip end portion of the fastening member. As a result, the resistance of the fluid medium during the suction is lowered, and the pressurized fluid supply efficiency of the rotary unit increases correspondingly. Also, the outer diameter of the protruding tip end portion of the fastening member can be reduced to a value smaller than the inner diameter of the internal thread portion. Thereby the resistance of the fluid medium during the suction is further reduced.

In one preferred embodiment of the present invention, the fastening member may have a tip end positioned on a center axial line of the rotary shaft. By so doing, since the entire one end face of the rotary shaft is covered by the fastening member, the resistance of the fluid medium is further reduced.

In another preferred embodiment of the present invention, the fastening member may include a non-columnar portion for engagement with a tool for rotary manipulation and a columnar portion formed in a portion closer to a base end portion than to the non-columnar portion, and the columnar portion is used for adjustment of a rotational balance of the rotary unit. According to the above described construction, since the rotational balance of the rotary shaft can be adjusted with the use of the fastening member, as compared with the balance adjustment accomplished by grinding only the impeller, the number of choices increased to facilitate the balance adjustment. On the other hand, with a tool engaged with the non-columnar portion, the fastening member can be easily fastened.

Where the fastening member includes the non-columnar portion and the columnar portion, the columnar portion may have an outer diameter set to be equal to the outer diameter of the tip end portion of the impeller that contacts the fastening member. According to the above described construction, since a step between the fastening member and the impeller is eliminated, the resistance of the fluid medium during the suction can be further reduced. Also, since the columnar portion can be made large, a large allowance for the rotational balance adjustment can be obtained and, accordingly, the balance adjustment can be accomplished easily.

Where the fastening member includes the non-columnar portion and the columnar portion, the non-columnar portion is formed to represent a ortho-polygonal shape circumscribed by the columnar portion when viewed from a tip end side. According to the above described construction, since a step between the non-columnar portion and the columnar portion is rendered to be small, the resistance of the fluid medium during the suction can be further reduced. Also, since the center of gravity of the non-columnar portion approaches an axis of the rotary unit, the balance adjustment can be facilitated.

Another aspect of the present invention provides a rotary unit which includes a rotary shaft, an impeller fitted to the rotary shaft and operable to pressurize a fluid medium sucked from one end portion side of the rotary shaft, and a fastening member fitted to one end portion of the rotary shaft and operable to fix the impeller to the rotary shaft while pressing the impeller in a direction axially of the rotary shaft, in which rotary unit the one end portion of the rotary shaft, which protrudes axially from the fastening member, is tapered in a direction away from the impeller.

According to the second aspect of the present invention described above, since the tip end portion of the rotary shaft is so shaped as to represent the diametrically constricted shape in which it is tapered in a direction away from the impeller, the fluid medium can be smoothly sucked into the impeller along the outer surface of the tip end portion of the rotary shaft. As a result, the resistance of the fluid medium during the suction is lowered and the efficiency of the rotary unit increases correspondingly.

Any combination of at least two constructions, disclosed in the appended claims and/or the specification and/or the accompanying drawings should be construed as included within the scope of the present invention. In particular, any combination of two or more of the appended claims should be equally construed as included within the scope of the present invention.

### BRIEF DESCRIPTION OF THE DRAWINGS

In any event, the present invention will become more clearly understood from the following description of preferred embodiments thereof, when taken in conjunction with the accompanying drawings. However, the embodiments and the drawings are given only for the purpose of illustration and explanation, and are not to be taken as limiting the scope of the present invention in any way whatsoever, which scope is to be determined by the appended claims. In the accompanying drawings, like reference numerals are used to denote like parts throughout the several views, and:
Fig. 1 is a schematic side view showing a motorcycle equipped with a supercharger of a kind including a rotary unit designed in accordance with a first preferred embodiment of the present invention;
Fig. 2 is a perspective view showing a combustion engine of the motorcycle as viewed from above in a direction diagonally downwardly;
Fig. 3 is a schematic horizontal sectional view showing the supercharger;
Fig. 4 is a schematic horizontal sectional view showing the rotary unit on a somewhat enlarged scale;
Fig. 5 is a perspective view showing, on a further enlarged scale, a fastening member used in the rotary unit;
Fig. 6 is a flowchart showing a balance adjusting method for the rotary unit;
Fig. 7 is a schematic sectional view showing a tip end portion of a rotary shaft used in the rotary unit designed in accordance with a second preferred embodiment of the present invention;
Fig. 8 is a schematic sectional view showing a tip end portion of a rotary shaft used in the rotary unit designed in accordance with a third preferred embodiment of the present invention; and
Fig. 9 is a schematic sectional view showing a tip end portion of a rotary shaft used in the rotary unit designed in accordance with a fourth preferred embodiment of the present invention.

### DESCRIPTION OF PREFERRED EMBODIMENTS

Hereinafter a preferred embodiment of the present invention will be described in detail with particular reference to the accompanying drawings. In describing the present invention, however, the terms "left and right" used hereinabove and hereinafter are to be understood as relative terms description of positions and/or direction as viewed from a driver maneuvering a vehicle such as a motorcycle.

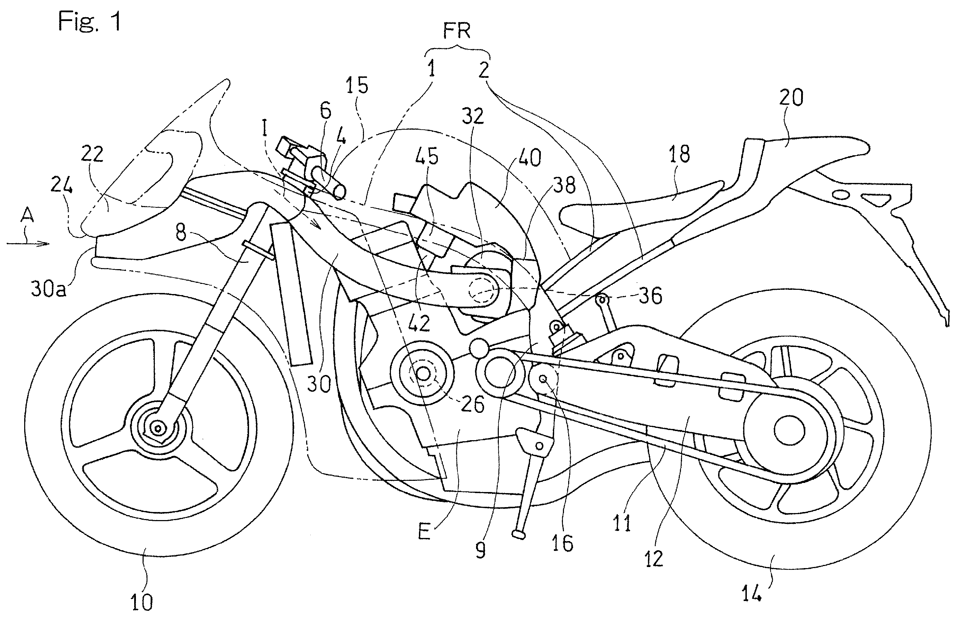

Fig. 1 illustrates a left side view of the motorcycle equipped with a supercharger having incorporated therein a rotary unit that is designed in accordance with a preferred embodiment of the present invention. The motorcycle shown therein includes a motorcycle frame structure FR including a main frame 1, which forms a front half portion thereof, and a seat rail 2 which forms a rear half portion thereof. The seat rail 2 is secured to a rear portion of the main frame 1. The main frame 1 has its front end formed integrally with a head pipe 4, and a front fork 8 is rotatably supported by the head pipe 4 through a steering shaft (not shown). The front fork 8 has a lower end portion to which a front wheel 10 is fitted, and a steering handlebar 6 is fixed to an upper end portion of the front fork 8.

A rear end portion of the main frame 1, which is a lower intermediate portion of the motorcycle frame structure FR, is provided with a swingarm bracket 9. A swingarm 12 is supported by a pivot pin 16, fitted to the swingarm bracket 9, for movement up and down about the pivot pin 16. This swingarm 12 has a rear end portion by which a rear wheel 14 is rotatably supported. A combustion engine, which is a drive source of the motorcycle, is fitted to a lower intermediate portion of the motorcycle frame structure FR and on a front side of the swingarm bracket 9. This combustion engine E drives the rear wheel 14 through a power transmission mechanism 11 such as, for example, a substantially endless chain. The combustion engine E is in the form of, for example, a water-cooled four cylinder, four cycle parallel multi-cylinder engine, but in the practice of the present invention, the combustion engine may not be necessarily limited to that specific type described above.

A fuel tank 15 is disposed on an upper portion of the main frame 1, and a driver's seat 18 and a fellow passenger's seat 20 are supported on the seat rail 2. Also, a cowing or fairing 22 made of a resinous material is mounted on a front portion of a vehicle body. The fairing 22 covers an area ranging from forwardly of the head pipe 4 to opposite lateral areas of the front portion of the vehicle body. The fairing 22 has an air intake opening 24 defined therein. The air intake opening 24 is positioned at a front end of the fairing 22 and is operable to introduce an intake air from the outside therethrough to the combustion engine E.

An air intake duct 30 is disposed on a left side of the motorcycle frame structure FR, and this air intake duct 30 is supported by the head pipe 4 with its front end opening 30a aligned with the air intake opening 24. Air introduced from the front end opening 30a of the air intake duct 30 is increased in pressure by the known ram effect.

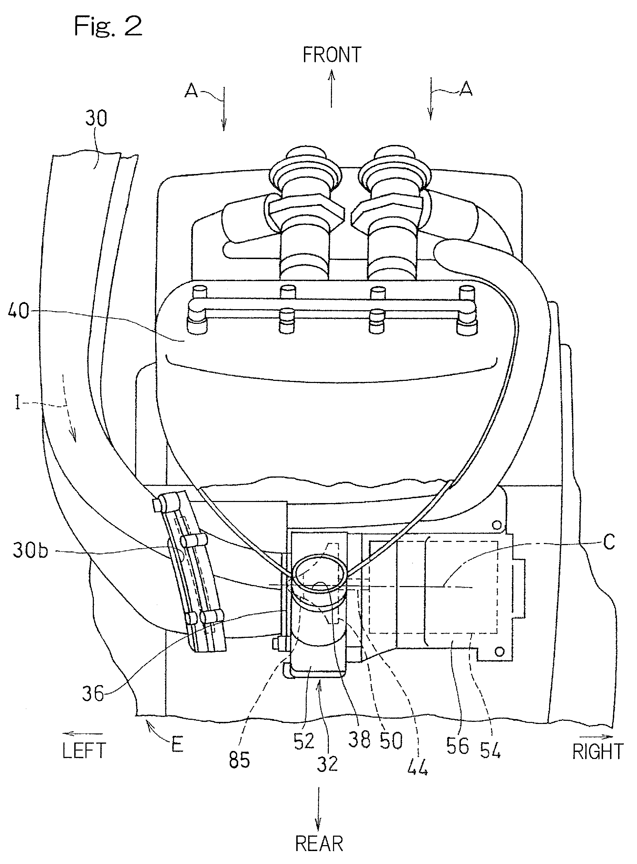

A supercharger 32 is disposed rearwardly of the combustion engine E. This supercharger 32 is operable to pressurize and then supply an air to the combustion engine E. The air intake duct 30 referred to previously, after having extended from front of the combustion engine E towards an outer left side of the engine E in a forward and rearward direction, is curved inwardly of the motorcycle before it reaches an intermediate portion of a vehicle widthwise direction (leftward and rightward direction), as shown in Fig. 2. The air intake duct 30 has a downstream end 30b, which extends in the leftward and rightward direction and is fluid connected with a suction port of the supercharger 32, and an incoming wind A can be introduced as an intake air I into the supercharger 32.

As shown in Fig. 1, an intake air chamber 40 is disposed between a discharge port 38 of the supercharger 32 and an air intake port 42 of the combustion engine E, and the discharge port 38 of the supercharger 32 is directly connected with the intake air chamber 40. The intake air chamber 40 serves to reserve the high pressure intake air I supplied from the discharge port 38 of the supercharger 32. It is, however, to be noted that the discharge port 38 of the supercharger 32 and the intake air chamber 40 may be connected with each other through a pipe. Between the intake air chamber 40 and the air intake port 42, a throttle body 45 is disposed.

The intake air chamber 40 is disposed above the supercharger 32 and the throttle body 45. Above the intake air chamber 40 and the throttle body 45, the fuel tank 15 is disposed.

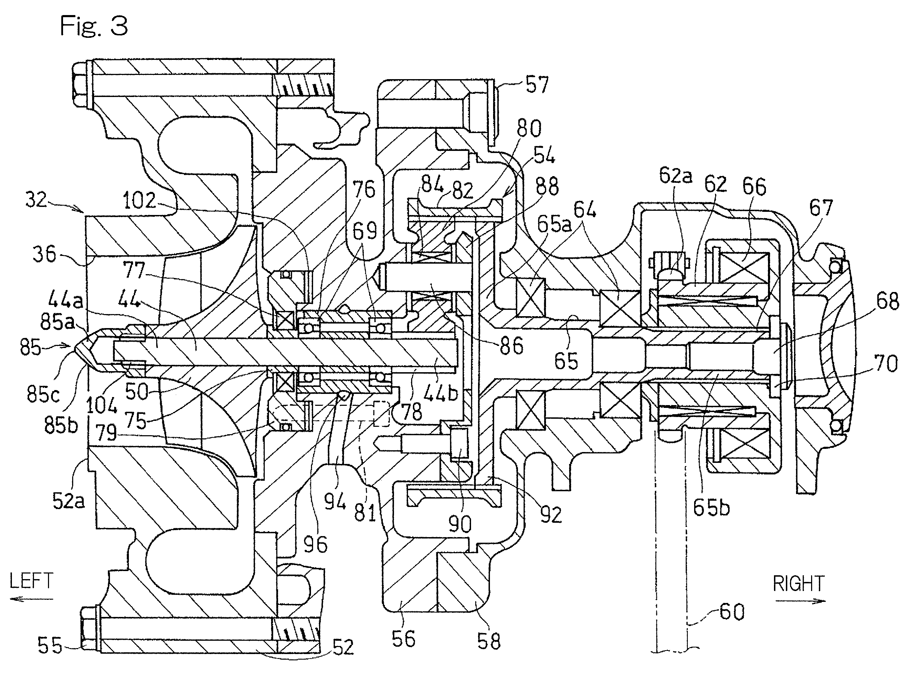

As shown in Fig. 3, the supercharger 32 is of a centrifugal flow type and includes a supercharger rotary shaft 44, an impeller 50 secured to one end portion (left side end portion 44a) of the supercharger rotary shaft 44, an impeller housing 52 for covering the impeller 50, a supercharger casing 56 for rotatably supporting the supercharger rotary shaft 44, a transmission mechanism 54 for transmitting a power of the combustion engine E to the impeller 50, and a transmission mechanism casing 58 for enclosing the transmission mechanism 54. The impeller 50 employed in the practice of this embodiment is made of an aluminum alloy, but the material therefor may not necessarily limited thereto and the impeller 50 may be made of a resinous material. The impeller 50 is operable to draw an intake air from the suction port 36, defined by the impeller housing 52, and then pressurize the intake air.

The impeller housing 52 and the supercharger casing 56 are connected together with the use of bolts 55, and the supercharger casing 56 and the transmission mechanism casing 58 are connected together with the use of bolts 57. In the practice of the embodiment now under discussion, the transmission mechanism 54 is employed in the form of a planetary gear transmission device, but the present invention is not necessarily limited to the use of the planetary gear type transmission device.

The supercharger 32 referred to above is driven by a power of the combustion engine E. Specifically, a rotational force of a crankshaft 26 (shown in Fig. 1), which is a rotary shaft of the engine E, is transmitted to an input shaft 65 of the transmission 54, which is connected with the supercharger rotary shaft 44, through a substantially endless chain 60 shown in Fig. 3. In particular, the input shaft 65 has a right side end portion provided with a sprocket 62, and the chain 60 is trained around a geared portion 62a of the sprocket 62.

The input shaft 65 is employed in the form of a hollow shaft and is rotatably supported by the transmission mechanism casing 58 by means of bearings 64. A right side end portion 65b, which is a tip end portion, of the input shaft 65 has an outer peripheral surface formed with splined teeth 67, and a one-way clutch 66 is splined to this outer peripheral surface. Via this one-way clutch 66, the sprocket 62 is connected with the input shaft 65. The right side end portion 65b of the input shaft 65 has an inner peripheral surface formed with a female threaded portion, and the one-way clutch 66 is, by means of a head portion of a bolt 68 that is threadingly engaged with this female threaded portion, mounted on the right side end portion 65b through a washer 70.

A right side portion 44b, which is a base end portion of the supercharger rotary shaft 44 of the supercharger 32, is connected with a left side end portion 65a, which is a base end portion of the input shaft 65, through the planetary gear device (transmission mechanism) 54. The left side end portion 65a of the input shaft 65 is comprised of a collar shaped flange portion 65a. The supercharger rotary shaft 44 is formed in the form of a solid shaft. The supercharger rotary shaft 44 is rotatably supported by the supercharger casing 56 through bearings 69.

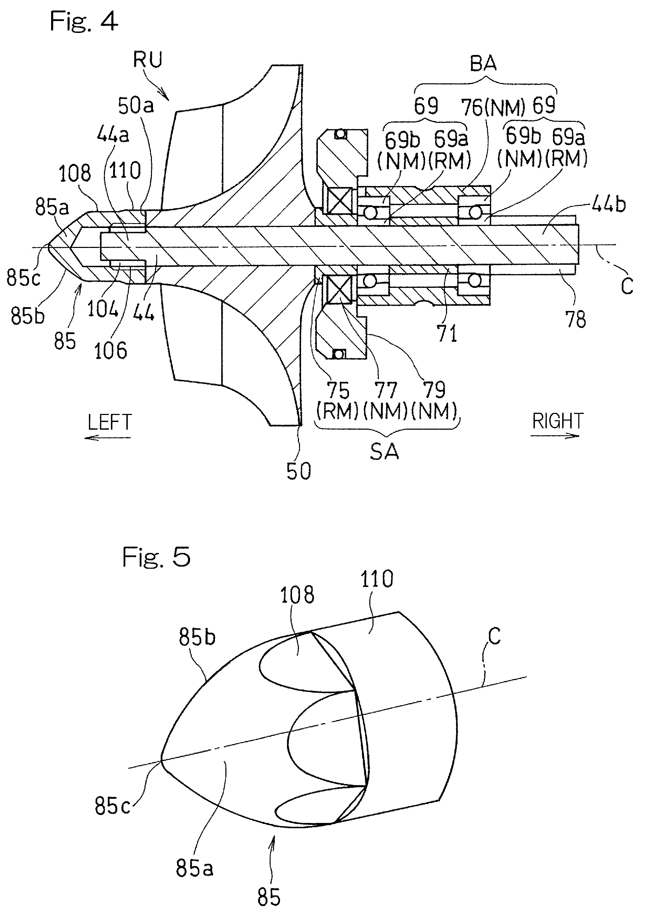

As shown in Fig. 4, the two bearings 69 are positioned spaced a distance from each other in an axial direction (in the leftward and rightward direction or widthwise direction of the motorcycle). Each of those bearings 69 includes an inner ring 69a, which is a rotation member, and an outer ring 69b which is a stationary or non-rotating member. A spacer 71, which is a spacer member, is disposed between the two inner rings 69a and 69a. Those bearings 69 and 69 are accommodated within a bearing housing 76 to thereby form a part of a bearing assembly BA. In other words, the inner ring 69a is a rotating component RM, which is rotatable integrally with the supercharger rotary shaft 44, whereas the outer ring 69b and the bearing housing 76 are non-rotating components NM which do not rotate integrally with the supercharger rotary shaft 44. The bearing housing 76 forms an outer peripheral portion of the bearing assembly BA. The spacer 71, also, forms a part of the bearing assembly BA.

The bearing assembly BA can rotatably support the supercharger rotary shaft 44 in a condition that an outer peripheral portion thereof is fixedly held. This bearing assembly BA is so structured and so configured as to be removably accommodated within an assembly accommodating space defined in the supercharger casing 56. Specifically, when and so long as the bearing assembly BA is accommodated within the supercharger casing 56, a radial gap is formed between the bearing assembly BA and the supercharger casing 56. An oil layer 96 as will be discussed in detail later is so formed in this radial gap that the bearing assembly BA can be floatingly supported relative to the supercharger casing 56.

Each of the bearings 69 forming a part of the bearing assembly BA is employed in the form of, for example, an angular contact ball bearing. The bearing housing 76 for the bearing assembly BA is formed with stepped portions which axial end faces of the respective outer rings 69b and 69b are brought into contact with. Axial length between the stepped portions is the same as that of the spacer 71. Accordingly, the bearing housing 76 are axially fixed relative to the two bearings 69. Also, a right side end face of the bearing housing 76 is axially opposed to the supercharger casing 56, and accordingly, a rightward movement of the bearing assembly BA is regulated, that is, restricted.

The right side end portion (base end portion) 44b of the supercharger rotary shaft 44 is formed with an external threaded gear 78. This externally threaded gear 78 is so formed as to have a diameter greater than the remaining portion of the supercharger rotary shaft 44. With a left side end face of the externally threaded gear 78, a right side end face of the inner ring 69a of the right side bearing 69 is brought into contact.

An oil seal assembly SA is disposed between the impeller 50 and the bearing assembly BA in the supercharger rotary shaft 44. This oil seal assembly SA includes a tubular collar 75, mounted on the supercharger rotary shaft 44 and sandwiched between the impeller 50 and the inner ring 69a of the left side bearing 69, and a seal holding body 79 for holding an oil seal 77 used to prevent the oil from leaking from an oil layer 96 (shown in Fig. 2) as will be described in detail later.

As shown in Fig. 3, the seal holding body 79 is supported by the supercharger casing 56 by means of a bolt 81. In other words, the seal holding body 79 functions as a stopper member for preventing the bearing assembly BA from moving in the axial direction. The collar 75 of the oil seal assembly SA forms a rotating component RM rotatable together with the supercharger rotary shaft 44, whereas the oil seal 77 and the seal holding body 79 are non-rotating components NM that do not rotate together with the supercharger rotary shaft 44.

The collar 75 is sandwiched between the impeller 50 and the inner ring 69a of the bearing assembly BA, and is then fixed to the supercharger rotary shaft 44. The seal holding body 79 serves to hold the oil seal 77, and the oil seal 77 serves to block off a radial gap between the collar 75 and the seal holding body 79 to thereby prevent the oil from leaking towards an impeller 50 side. A bolt hole necessitated to fit the seal holding body 79, which hole is formed in the supercharger casing 56, is formed radially outwardly of the assembly accommodating space. A left side end face of the bearing housing 76 is axially opposed to the seal holding body 79, and accordingly, leftward movement of the bearing assembly BA is restricted.

An external thread portion 104 is formed on an outer peripheral surface of the left side end portion (tip end portion) of the supercharger rotary shaft 44 which forms a rotary shaft of the present invention, and a fastening member 85 is fitted to the external thread portion 104 by means of threading engagement. The fastening member 85 is fitted to the supercharger rotary shaft 44 by pressing the impeller 50 towards an axially rear side (right side of the motorcycle) of the supercharger rotary shaft 44. This fastening member 85 is made of a material having a specific gravity that is higher than that of the impeller 50 and is specifically made of iron or steel.

As shown in Fig. 4, the fastening member 85 is positioned on a suction port 36 side than the impeller 50 and has its interior provided with a internal thread portion 106 that is engageable with the external thread portion 104 of the supercharger rotary shaft 44. This fastening member 85 has a tip end portion 85a, having its outer surface 85b extending axially beyond one end face of the supercharger rotary shaft 44 and also having a diametrically constricted shape in which the outer surface 85b is continuously and smoothly tapered in a direction away from the impeller 50. The fastening member 85 employed in the practice of the embodiment now under discussion is such that the internal thread portion 106 is blocked off at the tip end portion 65a from the axial direction. Specifically, the fastening member 85 employed in the practice of the embodiment now under discussion is a kind of a cap nut, particularly a hexagon cap nut. This fastening member 85 has a tapered tip end 85c positioned on a center axial line C of the rotary shaft 44. The tip end 85c of the fastening member 85 is positioned outwardly (on the left side) of an open end (left side end) 52a of the impeller housing 52 best shown in Fig. 3.

As shown in Fig. 5, the fastening member 85 includes a polygonal shaped non-columnar portion 108 engageable with a tool rotary manipulation such as, for example, torque wrench and a columnar portion 110 formed on one side of the non-columnar portion 108 adjacent to (on the right side of) a base end portion thereof. The non-columnar portion 108, when viewed from the tip end side, formed to represent a polygonal shape circumscribed by the circumcircle represented by the columnar portion 110. In the practice of the embodiment now under discussion, the non-columnar portion 108 is so formed as to represent an ortho-hexagonal column shape having equal sides. The columnar portion 110 referred to above is so designed as to have an outer diameter that is equal to the outer diameter of the tip end portion 50a of the impeller 50, best shown in Fig. 4, which contacts the fastening member 85. Accordingly, the columnar portion 110 and the tip end portion 50a of the impeller 50 are formed in flush with each other and, therefore, there is no step existing between the columnar portion 110 and the tip end portion 50a of the impeller 50.

The provision of the columnar portion 110 facilitates formation of the tapering shape of the tip end portion 85a with a processing machine. By way of example, the provision of the columnar portion 110 may be formed to have an axial dimension of a size capable of being chucked by the processing machine such as, for example, a lathe. The axial dimension of such columnar portion 110 is preferably 5 mm or more. The fastening member 85 is so formed as to represent a hollow shape having a hollow open at the base end side. Specifically, the hollow is so formed as to extend over the entirety, including the columnar portion 110 and the non-columnar portion 108, and also over a portion of the tip end portion 85a. The internal thread portion 106 is so formed as to extend from the columnar portion 110 to a halfway portion of the non-columnar portion 108 adjacent to the columnar portion 110. In other words, the interior of the non-columnar portion 108 has formed therein a hollow portion with no internal thread portion formed. Where the external thread portion 104 is so formed as to extend to the left side end of the supercharger rotary shaft 44, the internal thread portion 106 is protracted to a position leftwardly of the left side end of the supercharger rotary shaft 44.

The supercharger rotary shaft 44, the impeller 50, the oil seal assembly SA, the bearing assembly BA and the nut member 85 cooperate with each other to define a portable rotary unit RU that is removably accommodated within the supercharger casing 56 together with a member rotatable together with the impeller 50 and that is unitized. The rotary unit RU does preferably include all of members that are rotatable together with the impeller 50. This rotary unit RU rotates at a high speed, and in the practice of the embodiment now under discussion, rotates at a speed equal to or higher than 50,000 rotations or higher per minute.

Each of the opposite end faces of the impeller 50, which lie in the axial direction (leftward and rightward direction), is formed in respective planes perpendicular to the axial direction. The left side end face forms a bearing surface with which the fastening member 85 contacts, whereas the right side end face forms an abutment surface with which the collar 75 contacts. In the practice of the embodiment now under discussion, the right side end face of the impeller 50 is in contact with the left side end face of the externally threaded gear 78 indirectly through the collar 75, the inner ring 69a and the spacer 71.

In other words, in a condition in which the right end face of the impeller 50 is indirectly in contact with the left side end face of the externally threaded gear 78, the left side end face of the impeller 50 is urged by the fastening member 85 to thereby secure the impeller 50 to the supercharger rotary shaft 44. Here, a male threaded portion formed in the left side end portion 44a of the supercharger rotary shaft 44 is so set as to enable the fastening member 85 to be turned in a fastening direction when the supercharger rotary shaft 44 is rotated. Also, the externally threaded gear 78 is formed to represent a helical gear shape and is so configured that, when the supercharger rotary shaft 44 is rotated, an axial force counter to the direction of the suction reactive force, which is generated due to rotation of the impeller 50, may act on the supercharger rotary shaft 44. With the externally threaded gear 78 employed in the form of a helical gear, an axially acting load imposed on the bearings 69 can be reduced.

The fastening member 85 is formed with an adjusting portion for balance adjustment of the rotation of the rotary unit RU. Specifically, the columnar portion 110 of the fastening member 85 forms the adjusting portion for rotational balance adjustment. The balance adjustment is accomplished by a notch or padding applied to the outer peripheral surface of the columnar portion 110. It is to be noted that in addition to the fastening member 85, the adjusting portion referred to above may be provided in a rear surface of the impeller 50. The adjusting portion is preferably provided at a site where the specific gravity is higher than that of the impeller 50. Since in the practice of the embodiment now under discussion, the impeller 50 is made of an aluminum alloy while the fastening member 85 is made of a copper material, the fastening member 85 is the site where the specific gravity is higher than that of the impeller 50.

A power is inputted into the rotary unit RU through the planetary gear device 54 shown in Fig. 3. This planetary gear device 54 is disposed between the input shaft 65 and the supercharger rotary shaft 44, and is supported within the transmission casing 58. The right side end portion (base end portion) 44b of the supercharger rotary shaft 44 is formed with the external threaded gear 78, and a plurality of planetary gears 80 are threadingly connected with the externally threaded gear 78 while having been juxtaposed relative to each other in a circumferential direction. That is to say, the externally threaded gear 78 of the supercharger rotary shaft 44 functions as a sun gear of the planetary gear device 54. Also, the planetary gears 80 are threadingly connected with an internally threaded gear (ring gear) of a large diameter on a radially outer side thereof. The planetary gears 80 are rotatably supported by a carrier shaft 86 by means of bearings 84 mounted on the supercharger casing 56.

The carrier shaft 86 is fixed to a fixing member 88, and the fixing member 88 is in turn fixed to the supercharger casing 56 by means of a bolt 90. In other words, the carrier shaft 86 is fixed. The internally threaded gear 82 is drivingly connected with an input gear 92 that is provided on the left side end portion of the input shaft 65. Hence, the internally threaded gear 82 is drivingly connected so as to rotate in the same direction as that of the input shaft 65 and, with the carrier shaft 86 fixed, the planetary gears 80 rotate in the same direction as that of the internally threaded gear 82. The sun gear (externally threaded gear 78) is formed on the supercharger rotary shaft 44, which forms an output shaft of the planetary gear device 54, and rotates in the direction counter to that of the planetary gears 88.

The supercharger casing 56 is formed with a lubricant oil passage 94 for guiding a lubricant oil to the bearing housing 76, which passage 94 is in communication with a supercharger lubricant passage (not shown) provided outside of the supercharger casing 56. Specifically, the oil layer 96 referred to previously is formed between the supercharger casing 56 and the bearing housing 76, and the lubricant oil passage 94 is fluid connected with the oil layer 96. Accordingly, the bearing housing 76 is supported by the supercharger casing 56 through the oil layer 96 for movement in a radial direction. The oil layer 96 has a function of relieving oscillation of the supercharger rotary shaft 44.

An annular plate shaped shim 102 for adjusting a tip clearance, which is a gap between a tip end of the impeller 50 and an inner peripheral surface of the impeller housing 52, is inserted in between the seal holding body 79 (non-rotating component NM) and the supercharger casing 56.

Specifically, the supercharger casing 56 is formed with a shim accommodating space, and the shim 102 is interposed between the seal holding body 79 and the supercharger casing 56. The shim 102 is removable relative to the supercharger casing 56. The shim accommodating space is formed on a radially outer side of the assembly accommodating space. As the number of the shim 102 increases, the seal holding body 79 is fixed to the supercharger casing 56 at a position spaced leftwards relative to the supercharger casing 56. For example, a plurality of shims 102 having varying thicknesses are prepared, and one or a plurality of the shims 102 is/are disposed between the seal holding body 79 and the supercharger casing 56. Specifically, in a condition in which the bearing housing 76 is in contact with the seal holding body 79, the shim 102 is selected so that the tip clearance between the impeller 50 and the impeller housing 52 may fall within a predetermined range.

When and so long as the tip clearance referred to above falls within the above described predetermined range, the performance of the supercharger 32 can be maintained. The smaller the tip clearance, the higher the performance of the supercharger 32 at the time of high speed rotation. Since the axial position is adjusted by the rotary unit RU in its entirety, the rotational balance will not be disordered even when the axial position is adjusted.

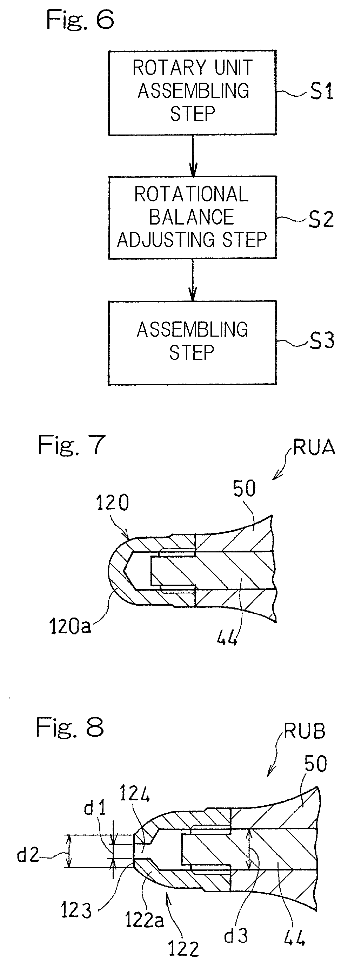

Hereinafter, a balance adjusting method for the rotary unit RU shown in Fig. 4 and a method of assembling it onto the supercharger will now be described. As shown in Fig. 6, the balance adjusting method includes a rotary unit assembling step S1 of assembling the rotary unit RU and a rotational balance adjusting step S2 of conducting the balance adjustment of the assembled rotary unit U. The rotary unit U after the balance adjustment is incorporated into the supercharger casing 56 at an assembling step S3.

During the rotary unit assembling step S1, the bearing assembly BA and the oil seal assembly SA are fitted to the supercharger rotary shaft 44 shown in Fig. 4 and, then the impeller 50 is mounted on the left side end portion 44a (tip end portion) of the supercharger rotary shaft 44. Thereafter, the fastening member 85 is threadingly engaged with the male threaded portion on the tip end of the supercharger rotary shaft 44. With the fastening member 85 so fastened as discussed above, the impeller 50, the inner ring 69a of the bearing assembly BA, the spacer 71 and the collar 75 of the oil seal assembly SA are pressed axially (towards the right side) to allow them to be sandwiched between the externally threaded gear 78 and the fastening member 85. In this way, the impeller 50, the inner ring 69a of the bearing assembly BA, the spacer 71 and the collar 75 are fixed to the supercharger rotary shaft 44 in a fashion immovable relative to each other and, in this way, the assemblage of the rotary unit U is completed.

During the rotational balance adjusting step S2, while the outer peripheral surface of the bearing housing 76 of the bearing assembly BA and the seal holding body 79 are supported with the use of a jig, the impeller 50 is rotated and the columnar portion 110 of the fastening member 85 is ground to thereby accomplish the rotational balance of the rotary unit RU. If so required, the rotational balance may be adjusted by scraping a back surface of the impeller 50 that little affects the performance of the supercharger 32. In the practice of the embodiment now under discussion, the balance is so adjusted that the center of gravity of the rotary unit RU may approach the axis of the rotary unit RU. By so doing, it is possible to avoid the possibility that the bearing 69 may be damaged and/or the rotary unit RU may constitute a source of vibrations when the rotary unit RU is driven at a high speed.

The fastening member 85 will not possibly be formed by means of a mechanical processing and the non-columnar portion 108 is formed. For this reason, the rotational balance is apt to fluctuate relative to the supercharger rotary shaft 44. Accordingly, even though the rotational balance is adjusted with the impeller 50 alone, the rotational balance may not be well adjusted during a condition in which the fastening member 85 is mounted. If the rotational balance is adjusted while the rotary unit RU is in the assembled condition as is the case with the embodiment now under discussion, the balance can be adjusted with due consideration paid to the rotational balance of the rotating components RM other than the impeller 50. Therefore, accuracy of the rotational balance can be increased.

During the assembling step S3, the rotary unit RU, after the rotational balance has been adjusted, is incorporated in the supercharger casing 56 without being dismantled. At this time, by inserting the shim 102 in between the seal holding body 79 of the oil seal assembly SA and the supercharger casing 56, the tip clearance between the impeller 50 and the supercharger casing 56 is adjusted.

In the balance adjusting method hereinbefore fully described, since the impeller 50, the bearing assembly BA and the oil seal assembly SA are integrated together with the supercharger rotary shaft 44 by the use of the fastening member 85, the rotary unit RU can be integrally fitted in unit to the supercharger casing 56. As a result, in a condition in which the impeller 50, the bearing assembly BA and the oil seal assembly SA are integrated with the supercharger rotary shaft 44, the balance of the rotary unit RU can be adjusted. Therefore, no balance adjustment is needed after the rotary unit RU has been incorporated in the supercharger 32 and, for this reason, the number of assembling steps can be reduced. Also, since the fastening member 85 is provided with the columnar portion 110 for the adjustment of the rotational balance, as compared with grinding of only the impeller 50, the balance adjustment can be easily accomplished with the increase of the number of choices in adjustment surface.

Also, since the seal holding body 79 of the seal assembly SA is fixed to the supercharger casing 56 by the use of the bolt 81, the rotary unit RU can be easily fitted to the supercharger casing 56. For this reason, there is no need to press-fit the rotary unit RU into the supercharger casing 56, and therefore, the assemblage is easy.

In the practice of the embodiment now under discussion, since the use is made of the planetary gear device 54 to transmit the power to the rotary unit RU, centering of the three shafts, that is, the input shaft 65, the carrier shaft 86 and the supercharger rotary shaft 44 is needed, and the necessary alignment is difficult to accomplish such centering. However, since the bearing housing 76 is radially movably supported by the supercharger casing 56 through the oil layer 96, fluctuation of the supercharger rotary shaft 44 resulting from the use of the planetary gear device 54 can be absorbed. In such case, although the bearing housing 76 cannot be fixed to the supercharger casing 56, fixing of the seal holding body 79 to the supercharger casing 56 makes it possible for the rotary unit RU to be rotatably accommodated within the supercharger casing 56. In addition, since the seal holding body 79 concurrently serves as a stopper portion for avoiding an undesirable axial movement of the bearing housing 76, the number of component parts can be reduced.

Also, the insertion of the shim 102 in between the seal holding body 79 of the oil seal assembly SA and the supercharger casing 56 results in adjustment of the tip clearance between the impeller 50 and the supercharger casing 56 and, therefore, the clearance adjustment of the impeller 50 can be easily accomplished.

Also, the rotational balance of the rotary unit RU is performed while the outer peripheral surface of the bearing housing 76 is supported. Accordingly, since the balance of the rotary unit RU can be accomplished in the condition in which the impeller 50, the bearing assembly BA and the oil seal assembly SA have been integrated with the supercharger rotary shaft 44, the adjustment work can be easily accomplished.

In the practice of the preferred embodiment, as the rotary unit RU the bearing housing 76, which does not rotate together with the impeller 50, is included in the rotary unit RU. Accordingly, while the outer peripheral portion of the bearing housing 76 is supported with the jig, the rotational balance adjustment can be accomplished. As a result, the adjustment of the rotational balance can be easily and precisely performed. Thus, a portion which rotatably supports the rotating component RM rotatable together with the impeller 50 is preferably included in the rotary unit RU.

In the construction hereinabove described, the outer surface 85b of the tip end portion 85a of the fastening member 85 shown in Fig. 4 is so designed as to represent the diametrically constricted shape in which the outer surface 85b is continuously and smoothly tapered in a direction away from the impeller 50. Accordingly, the high speed intake air can be drawn towards the impeller 50 smoothly along the outer surface 85b of the tip end portion 85a of the fastening member 85. As a result, the intake air resistance at the time the intake is so drawn is rendered to be low, and the pressurized fluid supply efficiency of the rotary unit RU, that is, the efficiency of the supercharger 32 increases. Also, the outer diameter of the tip end portion 85a of the fastening member 85, which protrudes, can be made smaller than the inner diameter of the internal thread portion 106. Accordingly, the intake air resistance at the time the intake is so drawn can be further reduced.

As shown in Fig. 2, the air intake duct 30 forming the intake air passage is curved at a site preceding the suction port 36 of the supercharger 32. For this reason, the flow of the intake air I is disproportioned to cluster in a direction curvedly outwardly (rearwardly of the motorcycle), thereby to allow the high speed intake air to flow in the vicinity of the center axial line C. Accordingly, the intake air resistance decreasing effect brought about by the tip end portion 85a of the fastening member 85 shown in Fig. 3 is increased. As a result that the efficiency of the supercharger 32 is increased, particularly the output of the engine E at the high output time is increased a few percent.

The fastening member 85 shown in Fig. 4 has its tapered tip end 85c positioned on the center axial line C. Accordingly, since one end face, in its entirety, of the supercharger rotary shaft 44 is covered by the fastening member 85, the intake air resistance is further reduced.

The columnar portion 110 of the fastening member 85 has its outer diameter so set as to be equal to the outer diameter of the tip end portion 50a of the impeller 50. Accordingly, no step is created between the fastening member 85 and the impeller 50 and, therefore, the resistance of the intake air during the suction can further be reduced. Also, when the columnar portion 110 is increased in size, the allowance for the adjustment of the rotary balance is rendered to be large, and the balance adjustment can therefore be accomplished easily.

The non-columnar portion 108 of the fastening member 110 is, as shown in Fig. 5, formed to represent the ortho-hexagonal column shape circumscribed by the columnar portion 110 when viewed from the side of the tip end thereof. Accordingly, since the step between the non-columnar portion 108 and the columnar portion 110 is rendered to be small, the intake air resistance at the time of the suction can be further reduced. Also, since the center of gravity of the non-columnar portion 108 approaches the center axial line C, the balance adjustment is easy to accomplish.

Fig. 7 illustrates a second preferred embodiment of the present invention. The rotary unit RUA according to this second embodiment of the present invention has its tapering tip end portion 120a which is of a semispherical shape. Other structural features thereof are similar to those hereinbefore described in connection with the first preferred embodiment of the present invention. Even in the practice of this second embodiment, effects similar to those afforded by the previously described first embodiment can be obtained.

Fig. 8 illustrates a third preferred embodiment of the present invention. A fastening member 122 of the rotary unit RUB according to this third embodiment of the present invention has its tapering tip end portion 122a formed with an axially perforated throughhole 124 defined therein. The throughhole 124 has its outer periphery formed with a flat tip end face 123 that lies in a radial direction. The diameter d1 of the throughhole 124 and the outer diameter of the tip end surface 123, that is, the diameter d2 of the tapering tip end portion 122a are so set to be smaller than the diameter d3 of the rotary shaft 44. Other structural features thereof are similar to those hereinbefore described in connection with the first preferred embodiment of the present invention. Even in the practice of this third embodiment, the effects similar to those afforded by the previously described first embodiment can be obtained.

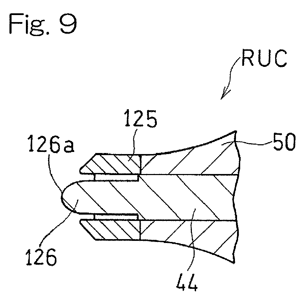

Fig. 9 illustrates a fourth preferred embodiment of the present invention. The rotary shaft 44 of the rotary unit RUC according to this fourth embodiment of the present invention has its tip end portion 126 projecting from a hexagonal nut 125, which forms the fastening member, towards an axial tip end side. An outer surface 126a of the tip end portion 126 is curved while being continuously smoothly tapered in a direction away from the impeller 50. Other structural features thereof are similar to those hereinbefore described in connection with the first preferred embodiment of the present invention. According to the fourth embodiment described above, the high speed intake air is introduced towards the impeller 50 smoothly along the outer surface 126a of the tapered tip end portion 126 of the rotary shaft 44. As a result, the intake air resistance at the time of the suction is reduced, thereby to increase the pressurized fluid supply efficiency of the rotary unit RUC.

The present invention, having been fully described in connection with the preferred embodiments thereof with reference to the accompanying drawings, is not necessarily limited to that shown and described hereinabove and is shown and described for the purpose of illustration and, therefore, numerous changes and modifications are apparent to those skilled in the art without departing from the spirit of the present invention. By way of example, although in describing the first to fourth embodiments of the present invention the non-columnar portion 108 is shown and described as representing a hexagonal column shape, the present invention is not necessarily limited thereto and any polygonal column shape other than the hexagonal column shape can be employed. Also, the non-columnar portion 108, other than the polygonal shape, may be of a substantially columnar shape which is formed with a groove (roulette) for a rotary manipulation tool.

Also, although in describing the embodiments of the present invention the adjustment portion has been shown and described as provided in the fastening member 85, the present invention is not necessarily limited thereto and the adjustment portion may be provided in any other rotary unit forming component than the impeller 50. For example, the collar may be disposed between the impeller 50 and the fastening member 85, and the adjustment portion may be provided in this collar. At this time, the collar shall be given an eccentricity, and the balance adjustment can be accomplished by rotationally moving the collar to change the circumferential position thereof. In addition, although in describing the foregoing embodiments of the present invention the outer surface 85b of the tip end portion 85a of the fastening member 85 has been shown and described as formed to represent the diametrically constricted shape in which the outer surface 85b is continuously tapered, the outer surface 85b may be tapered stepwise or the outer surface 85b may be of such a curved shape that its sectional shape may be recessed towards the center axial line C. Yet, the fastening member 85, when viewed from a tip end portion 85a side, may be formed to represent a helical shape having a direction of helix that is counter to the direction of rotation of the rotary unit RU.

The rotary unit according to the present invention is suitably applied to the centrifugal type supercharger in which the impeller rotates at a relatively high speed and, in particular, can be suitably applied to the supercharger of which speed can be increased by the planetary gear device. Also, the present invention can be suitably applied to the supercharger of a kind that can be driven by a power from a device of which number of rotations is a relatively high speed such as, for example, an engine. It is, however, to be noted that application may be made to the supercharger of any other structure and alto to the supercharger of a kind mounted on the engine for an automotive vehicle other than the motorcycle. Application may also be made to the supercharger of a kind that is driven by exhaust energies, an electrically powered motor and so on other than the rotational force of the engine. In addition it can furthermore be used in a rotary machine such as, for example, a blower other than the supercharger.

The rotary unit RU, if including the collar 75 in the seal assembly SA, works satisfactorily, and the oil seal 77 and the seal holding body 79 may be dispensed with from the rotary unit RU. Also, the use of the seal assembly SA may be dispensed with and the present invention is equally applicable to the supercharger of a structure that does not make use of the shim 102.

Furthermore, the use of the oil layer 96 may not be essential. In such case, the bearing housing 76 may be press fitted into the supercharger casing 56, or the bearing housing itself may be formed in the supercharger casing 56. Moreover, although in describing the foregoing embodiments of the present invention the rotary unit RU has been shown and described as integrated together with the rotating components sandwiched between the externally threaded gear 78, which is of a large diameter and provided at the base end portion, and the nut member 85 which is engaged with the tip end, the structure of the rotary unit RU may not be necessarily limited to that shown and described. For example, the present invention should be understood as including such an arrangement that a small diameter gear is provided in a base end portion and a large diameter stopper is provided in a tip end portion with the rotating components sandwiched between the stopper and the nut member threaded to the base end portion.

Accordingly, such changes and modifications are, unless they depart from the scope of the present invention as delivered from the claims annexed hereto, to be construed as included therein.

### REFERENCE NUMERALS

- 44: Supercharger rotary shaft (Rotary shaft)
- 50: Impeller
- 85, 120, 122: Fastening member
- 104: External thread portion
- 106: Internal thread portion
- 108: Non-columnar portion
- 110: Columnar portion
- RU, RUA, RUB, RUC: Rotary unit

## Claims

1. A rotary unit which comprises:
a rotary shaft;
an impeller fitted to the rotary shaft and operable to pressurize a fluid medium sucked from one end portion side of the rotary shaft; and
a fastening member fitted to one end portion of the rotary shaft and operable to fix the impeller to the rotary shaft while pressing the impeller in a direction axially of the rotary shaft, wherein:
the fastening member comprises an internal thread portion defined in an interior thereof, the internal thread portion being engageable with an external thread portion of the rotary shaft; and
the fastening member has a tip end portion, an outer surface of which tip end portion protrudes axially from one end face of the rotary shaft and is formed to represent a diametrically constricted shape in which the outer surface is tapered in a direction axially away from the impeller.

2. The rotary unit as claimed in claim 1, wherein the fastening member has a tip end positioned on a center axial line of the rotary shaft.

3. The rotary unit as claimed in claim 1 or 2, wherein:
the fastening member includes a non-columnar portion for engagement with a tool for rotary manipulation and a columnar portion formed in a portion closer to a base end portion than to the non-columnar portion; and
the columnar portion is used for adjustment of a rotational balance of the rotary unit.

4. The rotary unit as claimed in claim 3, wherein the columnar portion has an outer diameter set to be equal to the outer diameter of the tip end portion of the impeller that contacts the fastening member.

5. The rotary unit as claimed in claim 3 or 4, wherein the non-columnar portion is formed to represent a ortho-polygonal shape circumscribed by the columnar portion when viewed from a tip end side.

6. A rotary unit which comprises:
a rotary shaft;
an impeller fitted to the rotary shaft and operable to pressurize a fluid medium sucked from one end portion side of the rotary shaft; and
a fastening member fitted to one end portion of the rotary shaft and operable to fix the impeller to the rotary shaft while pressing the impeller in a direction axially of the rotary shaft, wherein
the one end portion of the rotary shaft, which protrudes axially from the fastening member, is tapered in a direction away from the impeller.
